# EUROPEAN PATENT APPLICATION

(11) **EP 2 592 705 A1**
(43) Date of publication of application: **15.05.2013**
(21) Application number: 12190441.1
(22) Date of filing: 29.10.2012
(51) Int. Cl.: H02B 1/38, H02B 1/30, H02B 1/28

(54) **Cabinet adapted to contain electrical or electronic apparatus**

(30) Priority: 11.11.2011 IT RE20110095
(71) Applicant: Conchiglia Societa' per Azioni, 42124 Reggio Emilia (IT)
(72) Inventor: Bonetti, ANDREA, 42124 Reggio Emilia (IT); Martinelli, Daniele, 42124 Reggio Emilia (IT)
(74) Representative: Corradini, Corrado

(57) **Abstract**

A cabinet (1) adapted to contain electrical or electronic apparatus comprising a bearing structure provided with at least one access opening (10) delimited by a perimeter edge (16), at least one crosspiece (40) removably fixed to the bearing structure (10) so as to divide the access opening (15) into at least two portions; said crosspiece (40) comprising at least one abutment wall (41), substantially without interruption with the perimeter edge (16), adapted to define at least two closed frames, delimiting each portion of the access opening (15), adapted to come in contact with respective doors (20) for closing the access opening. According to the invention, the crosspiece comprises a partition element projecting from said abutment wall outside the bearing structure by a heigth at least equivalent to the thickness of the doors.

## Description

### FIELD OF THE INVENTION

The present invention regards a cabinet adapted to contain electrical or electronic components.

More in particular, the invention regards cabinets, also referred to as cabins, intended to be installed outdoors, for example along the roads, in proximity of a residential complex or the like, and they are adapted to contain electrical or electronic apparatus intended to control different electrical units.

### PRIOR ART

As known, a cabinet adapted to contain electrical or electronic apparatus, comprises a rigid structure, for example made of rigid plastic material or metal, box-shaped provided with a substantially quadrangular base wall, a top wall and four lateral walls, at whose four corners there are defined four uprights.

One of the four lateral walls defines a through opening adapted to place the internal compartment of the cabinet in communication with the external.

The cabinet further comprises at least one door hinged to one of the uprights which delimit the fourth open lateral wall, so as to create a door for access to the interior compartment of the cabinet.

The cabinet, being generally installed outdoors, should be substantially sealed.

In practice, a gasket adapted to be fastened between the perimeter frame of the door and the perimeter frame of the opening when the door is in closing position is interposed between the door and the perimeter edge of the opening provided in the fourth wall.

A drawback observed in these cabinets of the known type lies in the fact that they have standard dimensions which depend on the dimensions of the electrical or electronic apparatus contained therein.

Thus, it is observed that upon the variation of the dimensions of the electrical or electronic apparatus that such cabinets are intended to contain, for example due to an expansion (or reduction) of the electrical units to be controlled, it is required to replace the cabinet or the side-by-side arrangement of the cabinet with a new cabinet intended to contain the additional apparatus.

These types of interventions are not particularly easy, in that they require a considerable increase of installation times and costs, besides the fact that they are extremely invasive, such cabinets normally being installed on fixed cement bases.

There are also known cabinets having more than one compartment provided with its own access opening normally closed by a respective door. Also in this case the compartment has a standard volume depending on the electrical or electronic apparatus which it is intended to contain and also in this case there is observed a low adaptability of the cabinet to the variations that the electrical or electronic apparatus may be subjected to over time, for example increasing or reducing the dimensions required therefor.

Examples of such known cabinets are described in patent nr. US 5 713 649, DE 10 2006 058780 or EP 2 355 156.

An object of the present invention is to overcome the aforementioned drawbacks of the prior art, through a simple, rational and inexpensive solution.

Such objects are attained by the characteristics of the invention indicated in the independent claim. The dependent claims outline preferred and/or particularly advantageous aspects of the invention.

### DESCRIPTION OF THE INVENTION

The invention, particularly, provides a cabinet adapted to contain electrical or electronic apparatus comprising a bearing structure provided with at least one access opening delimited by a perimeter edge, **characterised in that** it comprises at least one crosspiece removably fixed to the bearing structure so as to divide the access opening into at least two portions, said crosspiece comprising at least one abutment wall, substantially without interruption with the perimeter edge, adapted to define at least two closed frames, delimiting each portion of the access opening, adapted to come in contact with respective doors for closing the access opening.

According to the invention, the crosspiece comprises a partition element projecting from said abutment wall outside the bearing structure by a height at least equivalent to the thickness of the doors.

Due to such solution, the partition element allows solving the technical problem left unsolved by the prior art of protecting the door arranged at the lower part with respect thereto and the relative access opening portion intended for such door, for example against penetration of water or any other elements, both when the door is in closed position and when it is open. Moreover, at the same time such partition element allows to have a cabinet for electrical equipment more difficult to tamper with (break open fraudulently), therefore being safer for the specific application of the cabinet itself, which is intended to be installed outdoor, exposed to the inclemency of the weather and easily accessible by anyone.

Due to such solution, each of the cabinets can be divided into different variously configurable compartments, in terms of dimension and shape, each of which is insulated with respect to the external of the cabinet.

An aspect of the invention provides for that the cabinet comprises sealing means interposed between each of said doors and the respective frames. Thus, each compartment is substantially sealingily insulated with respect to the external environment.

An advantageous aspect of the invention provides for that the cabinet comprises at least one partition shelf adapted to partition the interior volume of the bearing structure into at least two distinct chambers, said crosspiece and said support structure comprising respective surfaces for supporting said shelf.

A further aspect of the invention provides for that the doors be hinged to the support structure through hinge means, said support structure comprising a plurality of first positioning notches, equally spaced from each other and defined in proximity of one side of said access opening, adapted to define a plurality of points for fastening said hinge means, so as to allow mounting doors of different dimensions.

Such solution allows facilitating the configuration of the cabinet according to the construction need; actually it allows facilitating the installation of the doors, simplifying the positioning operations along the cabinet and allowing, in a simplified manner, a high versatility of use with respect to the number, shape and dimensions of the doors.

A further aspect of the invention provides for that the support structure comprises a plurality of second positioning notches, equally spaced from each other and defined in proximity of two opposite sides of said access opening along the entire development thereof and substantially facing two by two, adapted to define a plurality of points for fastening said crosspiece.

This solution further allows facilitating the configuration of the cabinet according to the construction needs; actually it allows facilitating the installation of the crosspiece, simplifying the positioning operations along the cabinet and allowing, in a simplified manner, a high versatility of use with respect to the number, shape and dimensions of the selected doors.

### BRIEF DESCRIPTION OF THE DRAWINGS

Further characteristics and advantages of the invention will be apparent from reading the following description provided by way of non-limiting example, with reference to the figures illustrated in the attached drawings.
Figure 1 is an axonometric view of a cabinet, according to the invention, provided with three doors.
Figure 2A is a front view of figure 1 with the doors in closed position.
Figure 2B is a front view of figure 1 with the doors in open position.
Figure 3 is a lateral view of figure 1.
Figure 4 is a top view of figure 1.
Figure 5 is the view along the line of section V-V of figure 2A.
Figure 6 is the view along the line of section VI-VI of figure 3.
Figure 7 is the view along the line of section VII-VII of figure 4.
Figure 8 is the enlargement of detail VIII of figure 6.
Figure 9 is the enlargement of detail IX of figure 5.
Figure 10 is the enlargement of detail X of figure 7.
Figure 11 is the enlargement of detail XI of figure 6.
Figure 12 is the enlargement of detail XII of figure 5.
Figure 13 is an axonometric view of the cabinet, according to the invention, provided with two doors.

### PREFERRED EMBODIMENT OF THE INVENTION

With particular reference to such figures, a cabinet adapted to contain electrical or electronic apparatus suitable to manage the supply of electrical power to electrical units, such as residential buildings, road lighting or the like is indicated in its entirety with 1.

The cabinet 1 comprises a support structure 10 substantially box-shaped and parallelepiped-shaped, which is defined by a substantially quadrangular base wall 11, rectangular in the example, a top wall 12 also rectangular and four lateral walls, including a right wall 131, a left wall 132, a bottom wall 133 and a font wall 134, which define an internal compartment 14 intended to contain the electrical or electronic apparatus.

At one of the lateral walls, in particular the front wall 134, the cabinet 10 comprises an access opening 15, which can be - as illustrated in the example - substantially large like the entire wall in which it is provided. However, the access opening 15 is contoured by a perimeter edge 16 parametrically closed and adapted to delimit the access opening and which substantially defines the front wall 134.

In practice, the perimeter edge 16 comprises one right vertical side 161, one left vertical side 162 one upper horizontal side 163 and one lower horizontal side 164 joined to each other substantially without interruption and coplanar (with respect to a vertical plane in the figure).

The lateral walls, same case applying to the base wall 11 and the top wall 12 are made of hard plastic or metal and can have a low thickness, possibly provided with internal reinforcement ribs, not shown in that of the known type. The access opening 15 is intended to be closed by several doors 20 respectively provided with a handle 21, for example provided with special lock (not visible in the figures, in that of the known type).

Each door 20 is hinged, through hinge means 30, to the support structure 10, so as to generally provide a leaf-type door; in the example the door 20 is hinged to the support structure 10 at the corner between the left wall 132 and the front wall 134, according to a vertical rotational axis.

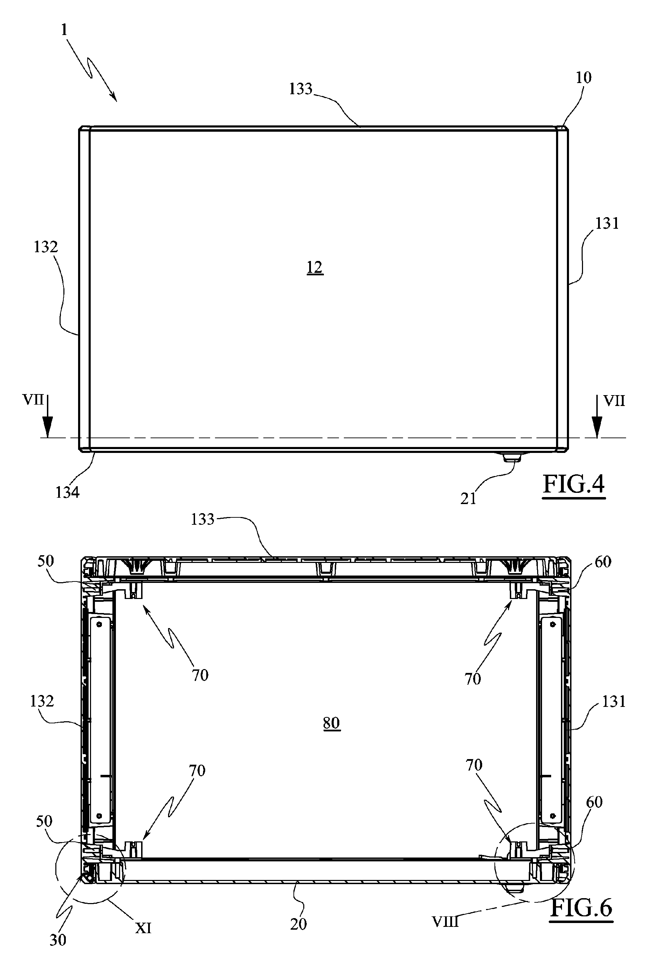

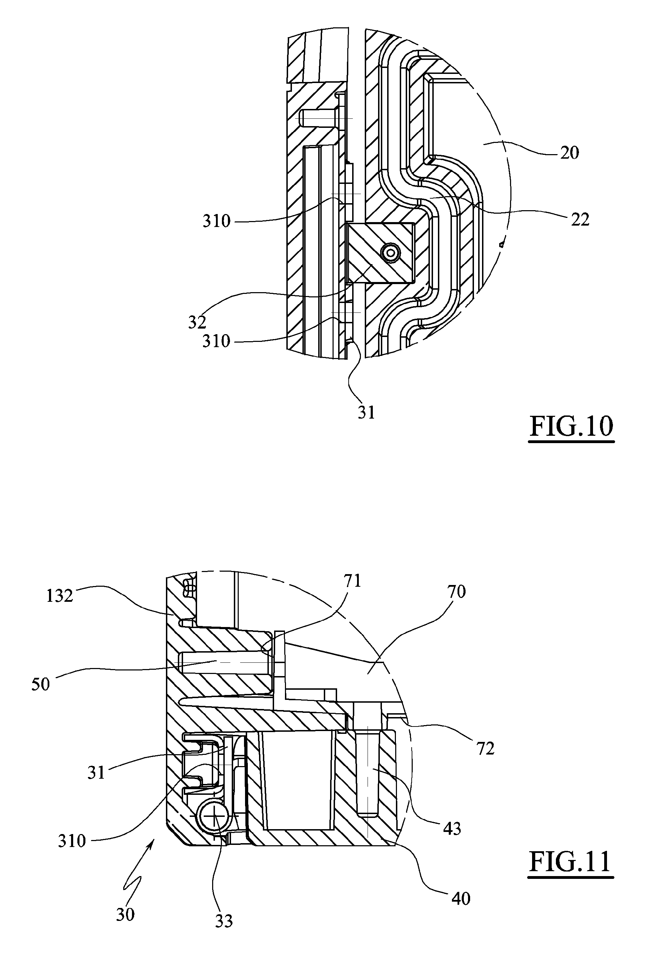

The hinge means 30 (see figures 10 and 11) comprise a first hinge element 31 fixed to the support structure 10 and a second hinge element fixed to the door, hinged to each other through a rotational pin 33 shown in figures 6 and 11.

In the example there is provided the use of two hinge means 30 for rotatably supporting each door 20, but it is not excluded that they can be more or less than two, for each door, depending on the construction needs.

The surfaces of the door 20 intended to be faced within the cabinet 1 comprises a housing cavity obtained in a perimeter area of the internal surface of the door and adapted to contain an annular gasket 22.

The annular gasket 22 is adapted to be compressed between the door 20 and at least one portion of the perimeter edge 16 which contours the access opening 15, as better outlined hereinafter.

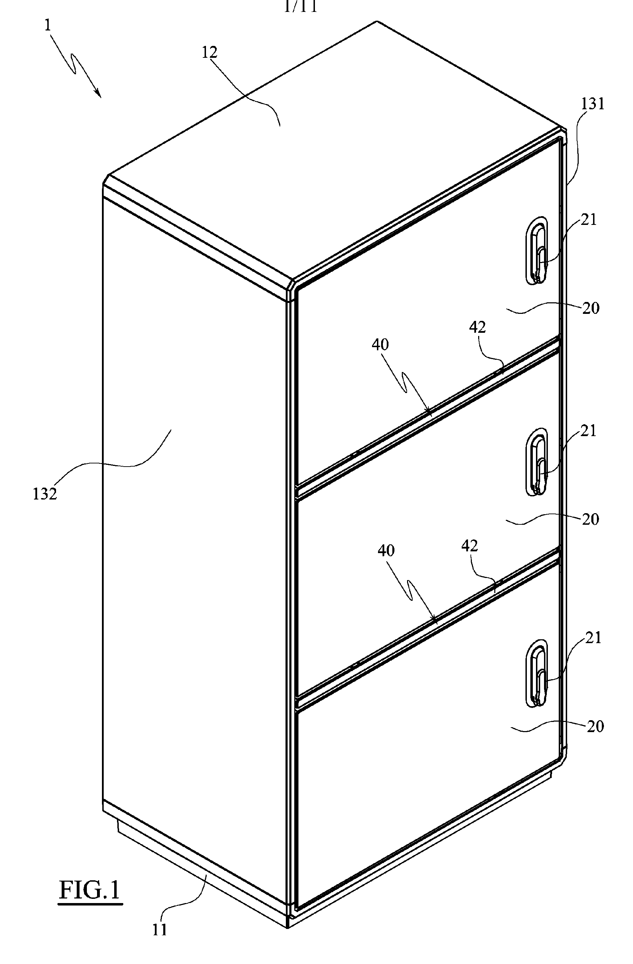

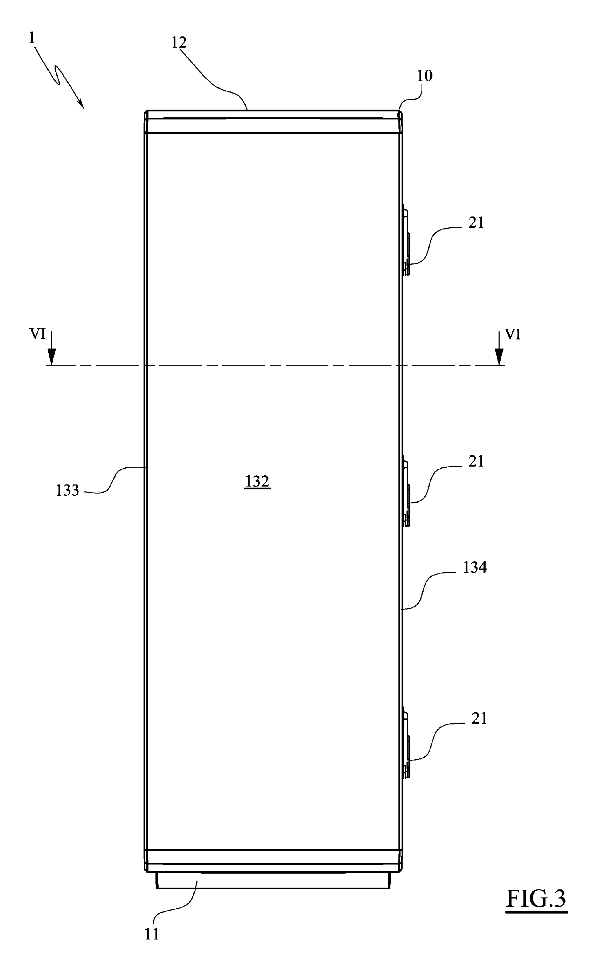

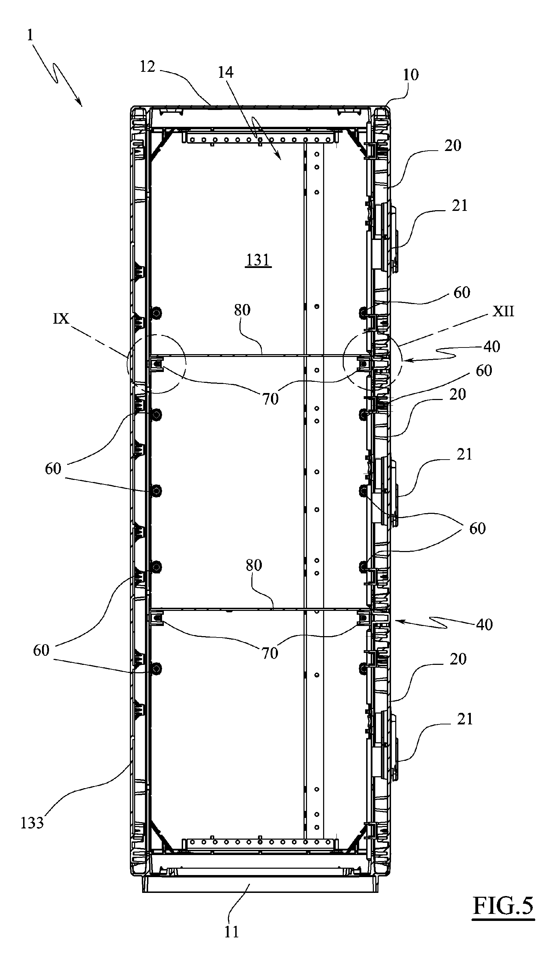

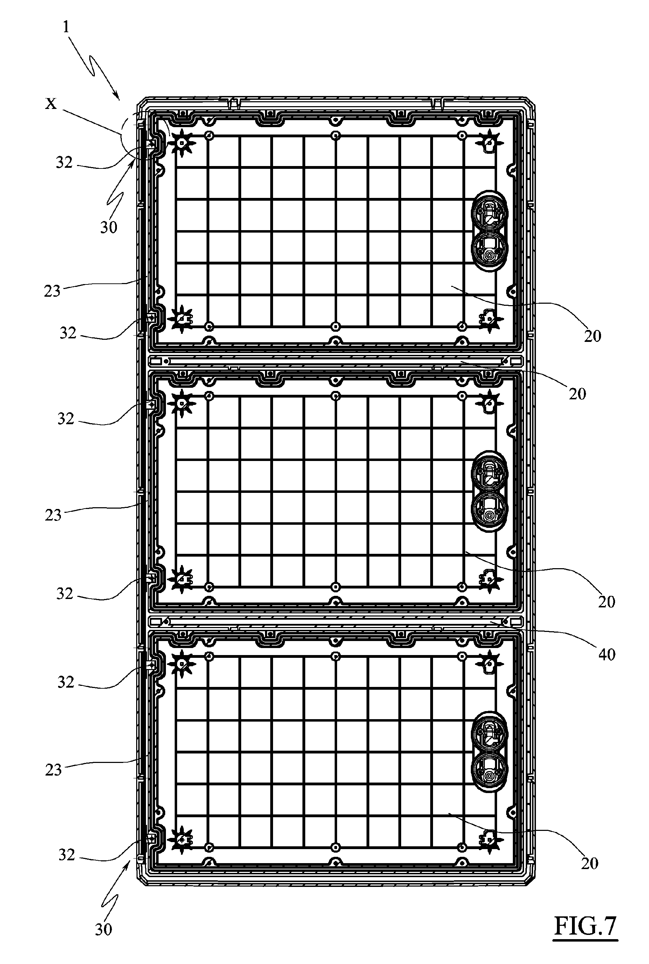

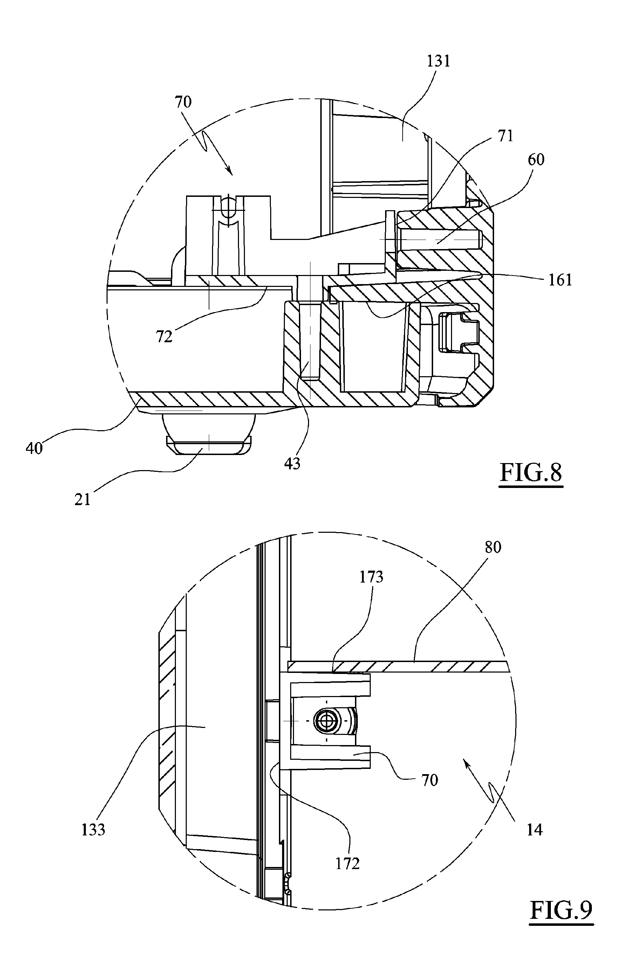

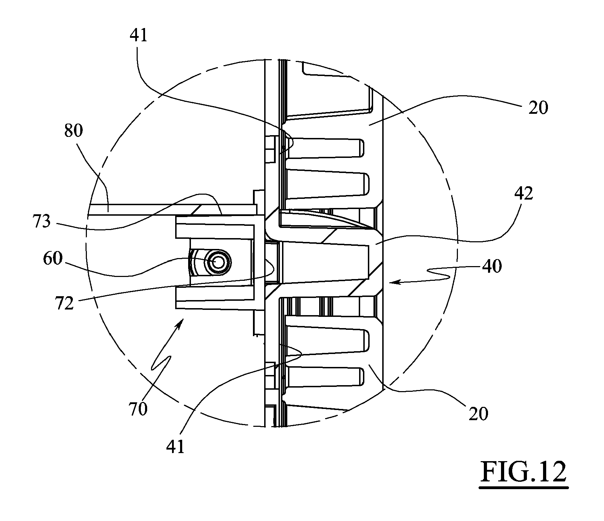

In the example illustrated from figures 1 to 12 the cabinet 10 comprises three doors 20 arranged adjacent to each other so as to generally close the access opening 15.

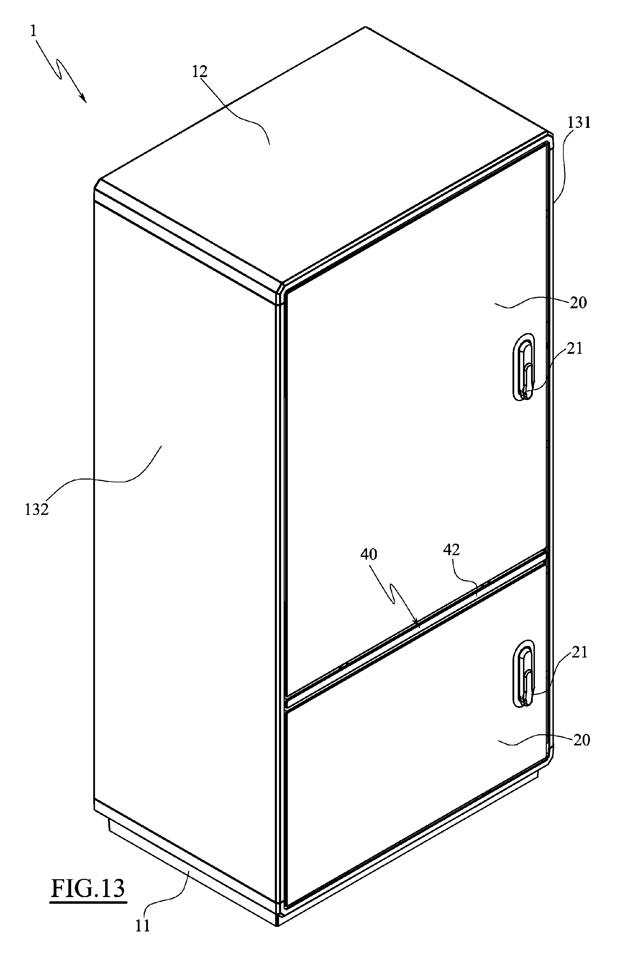

With the aim of attaining the objects of the present invention the number and the dimensions of the doors 20 may vary depending on the construction needs so that the combination thereof however closes in its entirety the entire access opening 15; for example, as observable in figure 13, the cabinet can be provided with only two doors 20 adapted to occlude the entire access opening 15.

The cabinet 1, particularly, comprises at least one crosspiece 40 removably fixed to the bearing structure 10 so as to divide the access opening 15 into at least two portions.

In practice, a first end of the crosspiece 40 is removably fixed to the right wall 131 (or to the right vertical side 161) and the second end of the crosspiece 40 is removably fixed to the left wall 132 (or to the left vertical side 162), so as to transversely transverse the access opening 15.

In practice, the number of the crosspieces 40 is determined as a function of the number of doors 20 that will close the access opening 15, in practice there will be positioned a crosspiece for each pair of adjacent doors 20 that occlude the access opening 15 of the cabinet 1.

In the example illustrated in figures 1-12, in which the access opening 15 is closed through three adjacent doors 20 there are shown two crosspieces 40 arranged at the area behind the area for joining the doors; in the case illustrated in figure 13, in which the same access opening 15 is closed through only two doors 20, it is sufficient to use a single crosspiece 40.

Each crosspiece 40 comprises an abutment wall 41 coplanar to the perimeter edge 16 and adapted to be joined thereto substantially without interruption.

Thus, the abutment wall 41 with the perimeter edge 16 define at least two closed frames, delimiting each portion into which the access opening 15 is divided, adapted to come in contact with the respective doors 20 (in practice with the gasket 22 thereof), when they are in closing position.

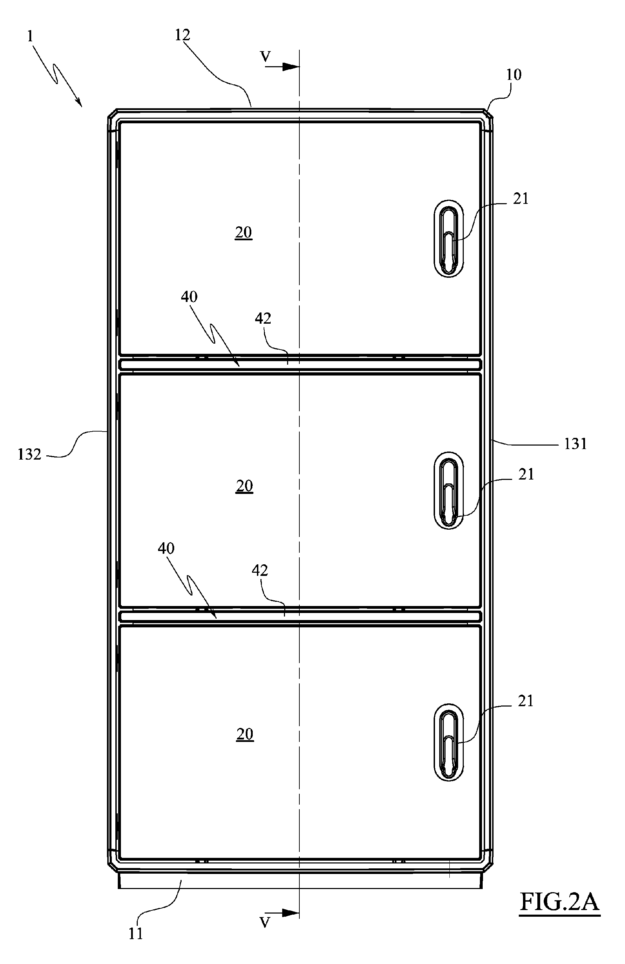

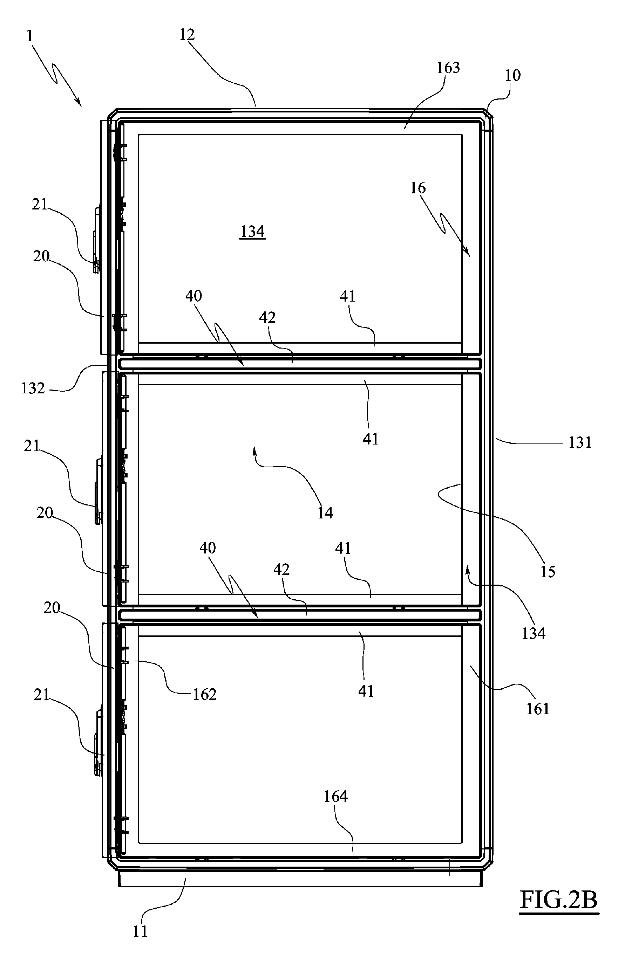

In the case illustrated in figures 1-12, as observable in figure 2B, the access opening 15 is divided into three portions having the same width (such portions may also alternatively provide widths differentiated with respect to each other) by two crosspieces 40 one arranged at 1/3 of the height of the access opening 15 and the other at 2/3 of the height.

A first frame (the upper one) is defined at the upper part by the upper horizontal side 163 of the perimeter edge, laterally by the upper portion of the right vertical side 161 and of the left vertical side 162 and at the lower part by the abutment surface 41 of the crosspiece 40 arranged at the upper part.

A second frame (the intermediate one) is laterally defined by an intermediate portion of the right vertical side 161 and of the left vertical side 162 at the upper part by the abutment surface 41 of the upper crosspiece 40 and at the lower part by the abutment surface 41 of the lower crosspiece 40.

Lastly, the third frame (the lower one) is defined at the lower part by the lower horizontal side 164 of the perimeter edge 16, laterally by the lower portion of the right vertical side 161 and of the left vertical side 162 and at the upper part by the abutment surface 41 of the lower crosspiece 40.

In the case illustrated in figure 13, the sole difference lies in the fact that the crosspiece alone divides the access opening 15 into only two portions and, thus the two frames which are formed are one (the upper one) defined by the upper horizontal side 163 of the perimeter edge, by the upper portion of the right vertical side 161 and of the left vertical side 162 and by the abutment surface 41 of the crosspiece 40, the other (the lower one) by the lower horizontal side 164 of the perimeter edge 16, by the lower portion of the right vertical side 161 and of the left vertical side 162 and by the abutment surface 41 of the crosspiece 40.

Each crosspiece 40 comprises a partition element 42 projecting from the abutment wall 41 towards the external of the cabinet 1, so as to partition the abutment surface into two portions, an upper portion and a lower portion. The partition element 42 comprises, in this case, a cantilevered shelf whose length is equivalent to the thickness of the doors 40 so as to be substantially flushed therewith when the doors are in closing position.

The partition element 42 and the abutment wall 41 are, advantageously, made in a single piece for example of the same material the support structure 10 of the cabinet 1 is made of.

In practice, each partition element 42 is superimposed - in plan view - to the door 20 arranged at the lower part with respect thereto, when the latter is in closing position.

On the left lateral wall 132 there is defined a first plurality of positioning notches, i.e. holes 310 for example blind holes, which are aligned to each other vertically, equally spaced by a constant pitch and defined in proximity of the corner between the left lateral wall 132 and the front wall 134, for example along a central portion of the longitudinal development of the corner. Such holes 310 are adapted to define a plurality of points for fastening the hinge means 30, so as to allow and facilitate mounting the doors 20 of different dimensions, as described beforehand.

In practice, the holes 310 are defined on a rigid element and fixed to the left 132 (and/or right 131) lateral wall for fastening and positioning the hinge element 31 (as observable in figure 10).

Furthermore, on the left lateral wall 132 and on the right lateral wall 131 there is defined a second plurality of positioning notches, i.e. respectively further blind holes 50 and 60, which are vertically arranged with respect to each other, equally spaced by a constant pitch and defined in proximity of the corner between the right lateral wall 131 and the front wall 134, for example along a central portion of the longitudinal development of the corner.

In practice, the further blind holes 50 and the further blind holes 60 have - two-by-two - the same height facing each other two-by-two, so that the blind holes 50 are arranged symmetrically with respect to the blind holes 60.

Each opposite pair of further blind holes 50 and further blind holes 60 is adapted to define a plurality of points for fastening the crosspiece 40, so as to allow mounting the crosspiece at different heights, depending on the positioning of the doors 20 of different dimensions.

In practice, the blind holes 50 are aligned along an imaginary line parallel to an imaginary line on which they are aligned to the holes 310 arranged on the left lateral wall 132, while the blind holes 60 are aligned along an imaginary line parallel to an imaginary line on which they are aligned to the holes 310 arranged on the right lateral wall 131.

In practice, each crosspiece 40 is fixed to the support structure 10 through two fastening brackets 70.

Each bracket 70 has at least one first surface 71 adapted to be rested on the lateral wall, right 131 or left 132, and fastened thereto through a threaded member, for example a self-threading screw adapted to be inserted within a blind hole 50 or 60.

The bracket 70 also comprises a second surface 72, undercut with respect to the first surface 71, which is adapted to be rested on the crosspiece 40, for example at the rear surface thereof faced within the cabinet 1, and fixed thereto through further threaded members, of the self-threading screw type or the like, for example which can be inserted in special positioning holes 43 provided on the back of the crosspiece 40.

Straight guides (not shown in that they are the usual grooves rectilinear thereto known to a man skilled in the art) adapted to be engaged by pins obtained on the back of the front wall 134 for the accurate undercut positioning of the bracket 70 can be provided on such second surface 72 of the bracket 70.

The bracket 70 further comprises a pair of third surfaces 73 arranged undercut both with respect to the first surface 71 and to the second surface 72.

The third surfaces 73 which are intended - during use - to be arranged at the upper part (depending on whether the bracket is associated to the right or to the left of the crosspiece 40) are adapted to define support surfaces horizontal and coplanar with respect to each other at two internal corners (between the front wall 134 and the right 131 and left 132 lateral walls) of the cabinet 1.

The right 131 and left 132 lateral walls, in proximity of the corner with the bottom wall 133, comprise a second series of further blind holes 50 (on the left lateral wall 132) and a second series of further blind holes 60 (on the right lateral wall 131), arranged as the first plurality of blind holes 50, 60 and at the same height thereof.

In practice, such second series of blind holes 50 and 60 are adapted to provide points for fastening further brackets 70, like the ones described above, whose third surfaces 73 are adapted to provide further horizontal support surfaces arranged at the other two internal corners of the cabinet 1 and substantially coplanar to each other and with the first support surfaces. The crosspieces 40 can thus be installed at various heights so as to partition the access opening into two or more portions adapted to be occluded by corresponding doors 20 of suitable shape.

The cabinet 1 also comprises at least one partition shelf 80 adapted to rest on the third surfaces which define respective coplanar and horizontal support surfaces 73 (and be fastened thereto), so as to partition the internal compartment of the bearing structure 10 into at least two chambers which are substantially separated from each other.

In practice, the cabinet 10 may comprise a partition shelf 80 behind each crosspiece 40, like described above, so that each portion into which the access opening 15 is partitioned there corresponds a chamber into which the interior volume of the bearing structure 10 and, thus of the cabinet 1, is partitioned.

Should it be required to modify the interior volume of each chamber into which the internal compartment 14 of the cabinet 1 is partitioned, for housing an electrical or electronic apparatus therein which occupies a greater or smaller space with respect to the one originally provided for such chamber, it is sufficient to demount the door 20 regarding such chamber, displacing or removing a crosspiece 40 which defines the portion of access opening 15 corresponding to said chamber and enclose the new portion of access opening which is created with a door 20 of greater or smaller dimensions with respect to that replaced, positioning the hinge means in the suitable holes 310.

The invention thus conceived can be subjected to numerous modifications and variants all falling within the scope of the inventive concept. Furthermore, all details can be replaced by other technically equivalent elements.

In practice, the materials used, as well as the shapes and contingent dimensions, may vary depending on the needs without departing from the scope of protection of the following claims.

## Claims

1. Cabinet (1) adapted to contain electrical or electronic apparatus comprising a bearing structure (10) provided with at least one access opening (15) delimited by a perimeter edge (16), at least one crosspiece (40) removably fixed to the bearing structure (10) so as to divide the access opening (15) into at least two portions, said crosspiece (40) comprising at least one abutment wall (41), substantially without interruption with the perimeter edge (16), adapted to define at least two closed frames, delimiting each portion of the access opening (15), adapted to come in contact with respective doors (20) for closing the access opening **characterised in that** the crosspiece (40) comprises a partition element (42) projecting from said abutment wall (41) outside the bearing structure (10) by a height at least equivalent to the thickness of the doors (20).

2. Cabinet (1), according to claim 1, **characterised in that** it comprises sealing means (22) interposed between each of said doors (20) and the respective frames (16,41).

3. Cabinet (1), according to claim 2, wherein said sealing means comprise a gasket (22) closed around itself ring-like associated to the interior wall of each door (20), so as to be compressed between the door (20) and the frame (16,41) when the door (20) is in closing position.

4. Cabinet (1) according to claim 1, **characterised in that** it comprises at least one partition shelf (80) adapted to partition the interior volume of the bearing structure (10) into at least two distinct chambers, said crosspiece (40) and said support structure (10) comprising respective surfaces (73) for supporting said shelf.

5. Cabinet (1) according to claim 1, wherein said doors (20) are hinged to said support structure (10) through hinge means (30), said support structure (10) comprising a plurality of first positioning notches (310), equally spaced from each other and defined in proximity of one side of said access opening (15), adapted to define a plurality of points for fastening said hinge means (30), so as to allow mounting doors (20) of different dimensions.

6. Cabinet (1) according to claim 1, wherein said support structure (10) comprises a plurality of second positioning notches (50, 60), equally spaced from each other and defined in proximity of two opposite sides of said access opening (15) along the entire development thereof and substantially facing each other two-by-two, adapted to define a plurality of points for fastening said crosspiece (40).

7. Cabinet (1) according to claim 1, **characterised in that** it comprises at least one fastening bracket (70) removably fixed to the support structure (10) and to the crosspiece (40) for positioning and fastening the crosspiece (40) to the support structure (10).

8. Cabinet (1) according to claims 4 and 7, wherein said fastening bracket (70) comprises at least one of said support surfaces (73).

9. Cabinet (1), according to claim 1, wherein the abutment wall (41) and the perimeter edge (16) are substantially coplanar.
